# EUROPÄISCHE PATENTANMELDUNG

(11) **EP 1 607 670 A1**
(43) Veröffentlichungstag der Anmeldung: **21.12.2005**
(21) Anmeldenummer: 05012172.2
(22) Anmeldetag: 06.06.2005
(51) Int. Cl.: F16L 19/04, F16L 33/207, F16L 33/22, B05B 15/06, E03C 1/04, E03C 1/06, E03C 1/02

(54) **Anschlussvorrichtung für einen Schlauch**

(30) Priorität: 11.06.2004 DE 102004028457
(71) Anmelder: HANSA METALLWERKE AG, 70567 Stuttgart (DE)
(72) Erfinder: Assenmacher, Bernd, 70597 Stuttgart (DE)
(74) Vertreter: Ostertag, Ulrich

(57) **Zusammenfassung**

Eine Brauseschlauchgarnitur (1) umfasst in an für sich bekannter weise einen flexiblen Brauseschlauch (2), der aus mehreren Lagen zusammengesetzt und dicht mit einem Anschlußstück (3) verbunden ist. Letzteres ist an einer Sanitärarmatur oder an einem Brausekopf befestigbar und weist einen Hals (7) auf, der in das Innere des Brauseschlauches (2) eingeschoben ist. Eine Klemmeinrichtung (10, 13) drückt den Brauseschlauch (2) dicht gegen den Hals des Anschlußstückes (3) an. Zusätzlich ist eine Dichtung (9) vorgesehen, welche zwischen der Außenmantelfläche des Brauseschlauches (2) und dem Anschlußstück (3) derart angeordnet ist, daß ein Vordringen von Wasser von außen zur benachbarten Stirnfläche (4) des Brauseschlauches (2) unterbunden ist. Auf diese Weise läßt sich der Brauseschlauch (2) vor Ort auf jede beliebige Länge kürzen, ohne daß befürchtet werden muß, daß Wasser in die Lagen des Brauseschlauches (2) eindringt und diesen dabei beschädigt oder unschön macht.

## Beschreibung

Die Erfindung betrifft eine Brauseschlauchgarnitur mit
a) einem flexiblen Brauseschlauch, der aus mehreren Lagen zusammengesetzt ist;
b) einem Anschlußstück, welches an einer Sanitärarmatur oder an einem Brausekopf befestigbar ist und einen Hals aufweist, der in das Innere des Brauseschlauches eingeschoben ist;
c) einer Klemmeinrichtung, mit welcher der Brauseschlauch dicht gegen den Hals des Anschlußstückes andrückbar ist.

Bekannte Brauseschlauchgarnituren der eingangs genannten Art, wie sie derzeit auf dem Markt sind, werden vom Hersteller so ausgeliefert, daß der Brauseschlauch eine vorgegebene Länge hat und an beiden Enden verschweißt ist. So kann kein Wasser von den Stirnseiten her zwischen die einzelnen Lagen des Brauseschlauches eindringen. Dieses Wasser könnte Materialien des Brauseschlauches angreifen oder diesen doch zumindest unansehnlich machen. Die optimale Länge des Brauseschlauches hängt vom Einzelfall ab und kann selbstverständlich vom Hersteller nicht vorausgeahnt werden. Es wird daher bisher werksseitig ein Brauseschlauch geliefert, dessen Länge jedenfalls für die meisten Anwendungsfälle ausreichend und für sehr viele Anwendungsfälle überdimensioniert ist. Es bilden sich daher oft unnötig lange Schleifen des Brauseschlauches, die z. B. an der Wand des Badezimmers hängen oder bei einer Wannenrandmontage in der Einbaunische zwischen Wand und Badewanne untergebracht werden müssen.

Aufgabe der vorliegenden Erfindung ist es, eine Brauseschlauchgarnitur der eingangs genannten Art so auszugestalten, daß die Länge des Brauseschlauches an die jeweiligen Gegebenheiten nachträglich optimal angepasst werden kann.

Diese Aufgabe wird erfindungsgemäß dadurch gelöst, daß
d) eine Dichtung vorgesehen ist, welche zwischen der Außenmantelfläche des Brauseschlauches und dem Anschlußstück derart angeordnet ist, daß ein Vordringen von Wasser von außen zur benachbarten Stirnfläche des Brauseschlauches unterbunden ist.

Eine erfindungsgemäße Brauseschlauchgarnitur kann daher wie folgt eingesetzt werden: Stellt der Installateur vor Ort fest, daß der werkseitig ausgelieferte Brauseschlauch zu lang ist, kann er diesen ganz nach Bedarf kürzen. Es entsteht dann zwar eine Stirnfläche des Brauseschlauches, die nicht verschweißt ist und an der grundsätzlich Wasser zwischen die einzelnen Lagen eindringen könnte. Dem wird jedoch erfindungsgemäß durch die Dichtung vorgebeugt, welche zwischen der Außenmantelfläche des Brauseschlauches und dem Anschlußstück liegt. Die angeschnittene Stirnfläche des Brauseschlauches ist daher von keiner Seite, weder von außen noch von innen her, vom Wasser erreichbar. Der Brauseschlauch ist daher nicht der Gefahr einer funktionalen oder ästhetischen Beeinträchtigung ausgesetzt.

Zweckmäßigerweise ist die Dichtung eine O-Ringdichtung, welche den Hals des Anschlußstückes umgibt. Derartige Dichtungen sind preiswert im Handel erhältlich und lassen sich gut um den Hals des Anschlußstückes herum positionieren.

Zweckmäßigerweise liegt die O-Ringdichtung in einer Ringnut des Anschlußstückes ein. Wenn die radial außen liegende Fläche der Ringnut sich konisch erweitert, kann die Dichtwirkung durch einen axialen Druck, unter dem die O-Ringdichtung gewissermaßen breitgequetscht wird, verbessert werden.

Bei einer besonders bevorzugten Ausführungsvorm der Erfindung umfasst die Klemmeinrichtung einen geschlitzten Klemmring und ein mit dem Anschlußstück verschraubbares Schraubteil, beispielsweise eine Überwurfmutter. Beim Aufdrehen des Schraubteiles auf das Anschlußstück wird der Klemmring radial nach innen komprimiert und der Endbereich des Brauseschlauches gegen den Hals des Anschlußstückes gedrückt. Gleichzeitig beaufschlagt eine Stirnfläche des Klemmringes die Dichtung. Der Klemmring übt also eine doppelte Funktion aus, indem er sowohl den Brauseschlauch an den Hals des Anschlußstückes anpresst als auch die zusätzliche Dichtung in Anlage sowohl an den Brauseschlauch als auch an das Anschlußstück bringt.

Dabei wiederum ist günstig, wenn der Klemmring und das Schraubteil komplementäre, zusammenwirkende konische Flächen besitzen. Auf diese Weise lassen sich vom Schraubteil sowohl radial als auch axial wirkende Kräfte gut auf den Klemmring übertragen.

Ein Ausführungsbeispiel der Erfindung wird nachfolgend anhand der Zeichnung näher erläutert; es zeigen
Figur 1 die Seitenansicht des Endbereiches einer Brauseschlauchgarnitur;
Figur 2 den Endbereich der Figur 1 im Axialschnitt.

In der Zeichnung ist mit dem Bezugszeichen 1 eine Brauseschlauchgarnitur gekennzeichnet, die ihrerseits einen flexiblen Brauseschlauch 2 und eine an diesem flexiblen Brauseschlauch 2 in nachfolgend zu beschreibender Weise befestigte Anschlußmutter 3 umfasst. Am gegenüberliegenden, nicht dargestellten Ende des Brauseschlauches 2 kann eine ähnliche Anschlußmutter oder ein anderes Anschlußfitting angebracht sein.

Der Brauseschlauch 2 besteht aus mehreren Lagen, was jedoch in der Zeichnung aus Übersichtlichkeitsgründen nicht dargestellt ist. Seine ringförmige Stirnfläche 4 ist bei seiner Auslieferung ab Werk verschweißt, so daß ein Eindringen von Wasser zwischen die einzelnen Lagen des Brauseschlauches 2 nicht möglich ist.

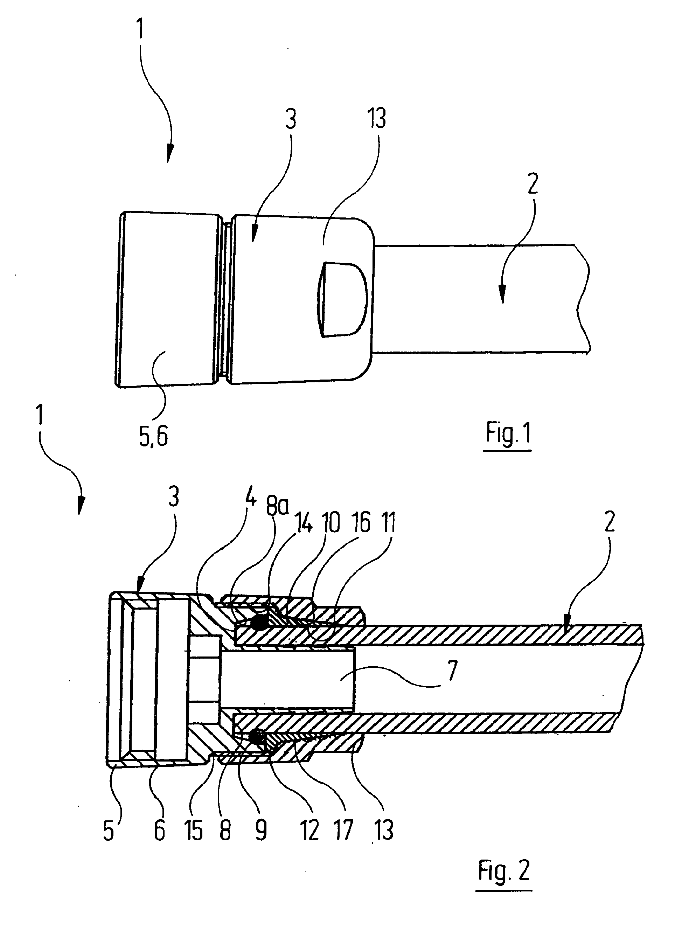

Die Anschlußmutter 3 weist eine in Figur 2 nach links, also vom Brauseschlauch 2 weg, weisende Schürze 5 auf, die auf ihrer Außenmantelfläche ein Außengewinde 6 trägt. Die Anschlußmutter 3 kann mit Hilfe des Außengewindes 6 wasserdicht an einer nicht dargestellten Sanitärarmatur oder an einer Handbrause befestigt werden, wie dies dem Fachmann bekannt ist.

An der Anschlußmutter 3 ist ein Hals 7 angeformt, der in das Innere des Brauseschlauches 2 eingeführt ist. An seiner Außenmantelfläche weist der Hals 7 in bekannter Weise eine Rippen- oder Stufenstruktur auf, welche den "Griff" des Halses 7 an dem Brauseschlauch 2 verbessert.

Der Hals 7 ist von einer Ringnut 8 umgeben, deren radial außenliegende Flanke 8a sich konisch zur in Figur 2 rechten, dem Brauseschlauch 2 benachbarten Stirnfläche der Anschlußmutter 3 hin erweitert. Im axial außenliegenden Bereich der Ringnut 8 ist zwischen der Außenmantelfläche des Brauseschlauches 2 und der Flanke 8a der Ringnut 8 eine O-Ringdichtung 9 angeordnet. Die Abmessungen der Ringnut 8 sowie der O-Ringdichtung 9 sind so aufeinander abgestimmt, daß in entspanntem, also nicht komprimiertem Zustand die O-Ringdichtung 9 axial in Figur 2 nach rechts aus der Ringnut 8 etwas heraussteht.

Auf den Brauseschlauch 2 ist in der Nähe seines Endes ein Klemmring 10 aufgeschoben, der einen in der Zeichnung nicht erkennbaren Längsschlitz aufweist, so daß er radial komprimierbar ist. Der Klemmring 10 besitzt eine zylindrische, innere Durchgangsbohrung 11, die an der Außenmantelfläche des Brauseschlauches 2 anliegt. Der Klemmring 11 weist darüber hinaus einen angeformten radial überstehenden Flansch 12 auf, dessen Stirnseite gegen die O-Ringdichtung 9 angedrückt werden kann. Dies geschieht mit Hilfe einer Überwurfmutter 13, die mit einem Innengewinde 14 auf ein Außengewinde 15 der Anschlußmutter 3 aufschraubbar ist. Eine innere, sich konisch von der Anschlußmutter 3 weg verjüngende Ringfläche 16 der Überwurfmutter 13 liegt an einer komplementär konischen Fläche 17 des Klemmringes 10 an.

Die Brauseschlauchgarnitur 1, die oben anhand der Figuren 1 und 2 beschrieben wurde, wird in folgender Weise montiert:

Zunächst wird die Anschlußmutter 3 mit ihrem Hals 7 in das Innere des Brauseschlauches 2 eingefürt. Nunmehr wird die O-Ringdichtung 9 in den Zwischenraum zwischen Außenmantelfläche des Brauseschlauches 2 und Flanke 8a der Ringnut 8 der Anschlußmutter 3 eingelegt; der Kemmring 10 wird, in Figur 2 von rechts kommend, gegen die O-Ringdichtung 9 angelegt. Abschließend wird die Überwurfmutter 13, ebenfalls in Figur 2 von rechts kommend, auf die Anschlußmutter 3 aufgedreht. Dabei geschieht zweierlei: Zum einen wird der Klemmring 10 aufgrund der konischen zusammenwirkenden Ringflächen 16 und 17 radial nach innen gedrückt, wodurch das Ende des Brauseschlauches 2 stärker gegen den Hals 7 der Anschlußmutter 3 gepresst wird. Die Innenmantelfläche des Brauseschlauches 2 ist auf diese Weise wasserdicht mit der Anschlußmutter 3 verbunden.

Zum anderen komprimiert die Stirnfläche des Flansches 12 des Klemmringes 10 die O-Ringdichtung 9, so daß diese die Außenmantelfläche des Brauseschlauches 2 mit der Flanke 8a der Ringnut 8 der Anschlußmutter 3 dicht verbindet.

Wie bereits oben erwähnt, ist im Neuzustand die ringförmige Stirnfläche 4 des Brauseschlauches 2 werksseitig verschweißt, so daß ein Eindringen von Wasser, welches z. B. als Spritzwasser von außen kommt, zwischen die Lagen des Brauseschlauches 2 zunächst unterbunden ist. So lange dieser Neuzustand des Brauseschlauches 2 vorliegt, ist die O-Ringdichtung 9 an und für sich entbehrlich. Wenn sich jedoch herausstellt, daß der werksseitig gelieferte Brauseschlauch 2 zu lang ist, kann er vom Installateur einfach gekürzt werden. Die neu entstehende, geschnittene Stirnfläche 4 des Brauseschlauches 2 ist dann nicht mehr verschweißt; die Zwischenräume zwischen den einzelnen Lagen des Brauseschlauches 2 wären nunmehr für Wasser zugänglich. In diesem Zustand erweist sich nunmehr die Bedeutung der O-Ringdichtung 9, welche einen Wasserzutritt von außen her verhindert.

## Patentansprüche

1. Brauseschlauchgarnitur mit
a) einem flexiblen Brauseschlauch, der aus mehreren Lagen zusammengesetzt ist;
b) einem Anschlußstück, welches an einer Sanitärarmatur oder an einem Brausekopf befestigbar ist und einen Hals aufweist, der in das Innere des Brauseschlauches eingeschoben ist;
c) einer Klemmeinrichtung, mit welcher der Brauseschlauch dicht gegen den Hals des Anschlußstückes andrückbar ist,
**dadurch gekennzeichnet, daß**
d) eine Dichtung (9) vorgesehen ist, welche zwischen der Außenmantelfläche des Brauseschlauches (2) und dem Anschlußstück (3) derart angeordnet ist, daß ein Vordringen von Wasser von außen zur benachbarten Stirnfläche (4) des Brauseschlauches (2) unterbunden ist.

2. Brauseschlauchgarnitur nach Anspruch 1, **dadurch gekennzeichnet, daß** die Dichtung (9) eine O-Ringdichtung ist, welche den Hals (7) des Anschlußstückes (3) umgibt.

3. Brauseschlauchgarnitur nach Anspruch 2, **dadurch gekennzeichnet, daß** die O-Ringdichtung (9) in einer Ringnut (8) des Anschlußstückes (3) einliegt.

4. Brauseschlauchgarnitur nach Anspruch 3, **dadurch gekennzeichnet, daß** die radial außenliegende Flanke (8a) der Ringnut (8) sich konisch erweitert.

5. Brauseschlauchgarnitur nach einem der vorhergehenden Ansprüche, **dadurch gekennzeichnet, daß** die Klemmeinrichtung einen geschlitzten Klemmring (10) und ein mit dem Anschlußstück (3) verschraubbares Schraubteil (13) umfasst, wobei beim Aufdrehen des Schraubteils (13) auf das Anschlußstück (3) der Klemmring (10) radial nach innen komprimiert, der Endbereich des Brauseschlauches (2) gegen den Hals (2) des Anschlußstückes (3) gedrückt wird und eine Stirnfläche des Klemmrings (10) die Dichtung (9) beaufschlagt.

6. Brauseschlauchgarnitur nach Anspruch 5, **dadurch gekennzeichnet, daß** der Klemmring (10) und das Schraubteil (13) komplementäre, zusammenwirkende konische Flächen (16, 17) besitzen.
